# EUROPEAN PATENT APPLICATION

(11) **EP 2 466 129 A2**
(43) Date of publication of application: **20.06.2012**
(21) Application number: 11193139.0
(22) Date of filing: 13.12.2011
(51) Int. Cl.: F03D 11/00

(54) **Heli-hoist platform**

(30) Priority: 15.12.2010 CN 201020660928 U; 03.08.2011 CN 201120279199 U
(71) Applicant: Siemens Aktiengesellschaft, 80333 Munich (DE)
(72) Inventor: Jensen, Jens Bomholt, 8700 Horsens (DK); Kristensen, Aage, 7323 Give (DK); Nielsen, Rune, 7100 Vejle (DK); Svendsen, Kenneth, 8600 Silkeborg (DK)

(57) **Abstract**

The present invention relates to a heli-hoist platform for a wind turbines.

This invention provides a heli-hoist platform that is an integral part of the nacelle. Therefore fewer parts are needed, which saves not only installation time and weight but is also easier to install and saves costs for the manufacturing of the heli-hoist platform.

## Description

### FIELD OF THE INVENTION

The present invention relates to a heli-hoist platform for a wind turbines.

### BACKGROUND OF THE INVENTION

A wind turbine contains one or more Rotor blades mounted to a hub. The hub is connected to a nacelle and the nacelle is mounted on a tower. The wind turbine converts the energy of moving air to a different form of energy, mainly electric power. For this the rotor blades are formed in a way that they can transform the energy of the moving air into a rotation of the hub. The rotation of the hub is then transferred via a shaft through a gear to a generator. It is also possible, that the wind turbine is gearless and the rotation of the rotor blades and hub is directly transferred to the generator via a shaft. The generator then generates electrical energy.

Wind turbines are erected onshore and offshore. Offshore wind turbines combine certain advantages, usually there is a higher wind speed in hub height, and also the turbines do not annoy people in a so high degree as onshore.

Wind turbines erected offshore have a high utilization and contain a lot of moving parts that are under high load. So there is a high need for a regular maintenance for offshore wind turbines. For service a service crew has to visit the wind turbine, usually the crew brings tools and spare parts.

An offshore wind turbine can be reached by ship, but the wave conditions might make it difficult, dangerous or impossible to approach the wind turbine and allow the service crew to enter the wind turbine. If the weather conditions do not allow entering the wind turbine for service or repair, this leads to a loss of production of electrical energy. A bad weather situation can occur often and last for a long time, so this might lead to situations where the wind turbine is out of order for a long time.

It is prior art to attach a heli-hoist platform on top of the nacelle of a wind turbine. This conventional heli-hoist platform contains a floor and a railing and is build as a structure that is attached to the nacelle. This leads to a lot of additional parts that are used for building the structure, additional weight, installation time to attach the structure to the nacelle, and this leads to high costs for the heli-hoist platform.

It is the aim of the invention to provide an improved heli-hoist platform.

The aim is reached by the features of the independent claim. Preferred embodiments of the invention are described in the dependent claims.

This invention provides a heli-hoist platform that is an integral part of the nacelle. Therefore fewer parts are needed, which saves not only installation time and weight but is also easier to install and saves costs for the manufacturing of the heli-hoist platform.

### SUMMARY OF THE INVENTION

The present invention enclosed an integrated heli-hoist platform for a nacelle of a wind turbine, which need not an additional platform that is attached to/mounted on top of the nacelle.

According to an embodiment of the present invention, there is provided an heli-hoist platform for a nacelle of a wind turbine, charactered in that: platform floor, which is also the roof of the nacelle and is an integral part of the nacelle; railings, which are attached to the platform floor, in order to define the borders of the heli-hoist platform and to avoid that parts slide off the heli-hoist platform or miss the heli-hoist platform while being lowered to the heli-hoist platform.

The platform floor is covered with a non-slip surface to prevent accidents.

The heli-hoist platform includes an entrance through the platform floor to allow service crew to enter the wind turbine from the heli-hoist platform.

The platform floor is equipped with an additional support inside the nacelle to be capable of bearing more weight.

The platform floor includes several integrated fastening points, for attaching the railings to the platform floor.

The several integrated fastening points are attached to the platform floor by bolts or screws.

The several integrated fastening points are integrated in the platform floor, fitting to attach the feet of the railings to the platform floor.

The nacelle includes a stronger integral support with more support bars in the area of the heli-hoist platform.

By the present invention, it becomes easier to install, less material needed, less parts needed, less weight of the nacelle.

In addition, as the upper cover of the nacelle is big enough, only a rail or wall is needed to define the borders of the heli-hoist platform and to avoid that parts slide of the platform or miss the platform while being lowered to the platform. In addition, as the roof 1 of the nacelle is covered with a non-slip surface all over the heli-hoist area, accidents can be prevented.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the following detailed description.

### BRIEF DESCRIPTION OF THE DRAWINGS

The present invention will become more fully understood from the detailed description given hereinafter and the accompanying drawings which are given by way of illustration only, and thus are not limitative of the present invention and wherein:

Fig. 1 is a schematically top-view diagram illustrating an embodiment of the invention.

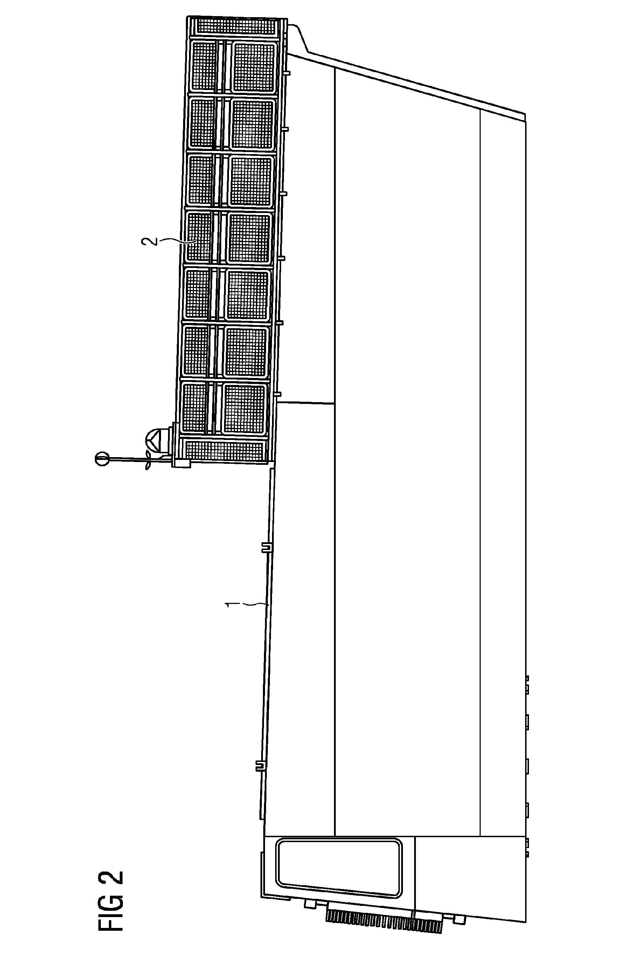

Fig. 2 is a schematically side view diagram illustrating the embodiment in Fig 1.

Fig. 3 is a schematically exploded diagram illustrating the attachment of the elements.

### DETAILED DESCRIPTION OF THE PREFERRED EMBODIMENTS

The present invention relates in general to an integrated heli-hoist platform for a wind turbines.

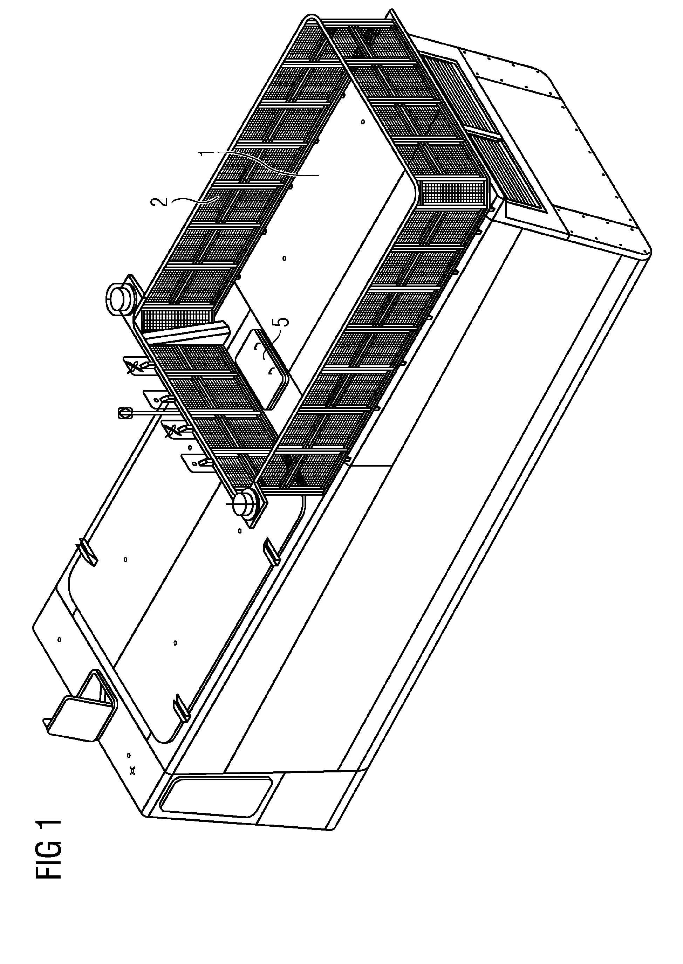

One embodiment of the invention is schematically illustrated in Fig.1.

As shown in Fig.1, the inventive heli-hoist platform is not an additional platform that is attached to/mounted on top of the nacelle. The inventive platform is an integral part of the nacelle, and the roof 1 of the nacelle is at the same time the floor of the heli-hoist platform. In order to define the borders of the heli-hoist platform and to avoid that parts slide off the platform or miss the platform while being lowered to the platform, a railing 2 is attached to the roof 1. In addition, the roof 1 of the nacelle is covered with a non-slip surface all over the heli-hoist area to prevent accidents.

There is an entrance 5 through the roof 1 to allow the service crew to enter the turbine from the platform.

For building the platform, the roof 1 of the nacelle is equipped with an additional support inside the nacelle to be capable of bearing more weight.

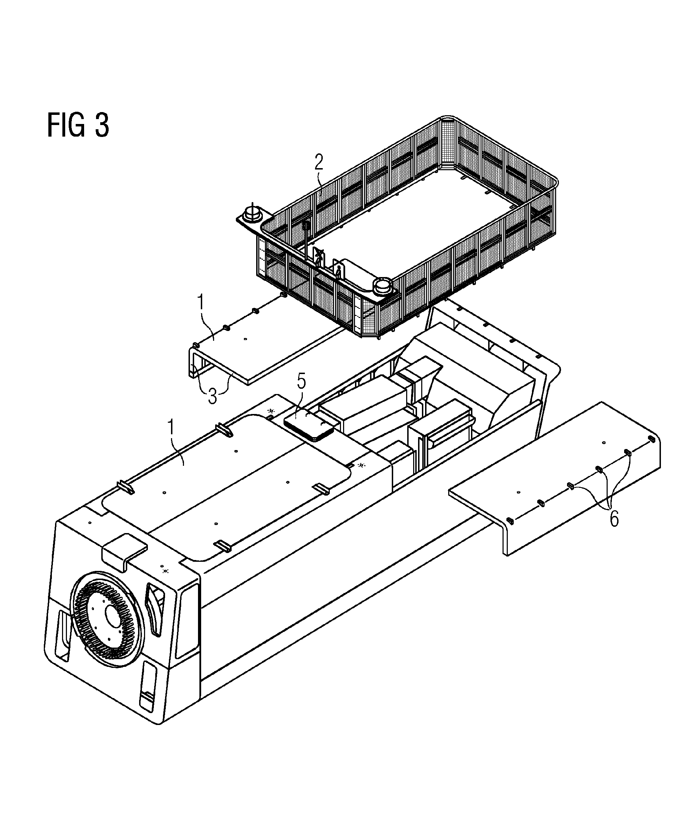

In addition, as shown in Fig.3, there are several integrated fastening points 6 on the roof 1, for attaching the railing 2 to the roof 1 of the nacelle. The several integrated fastening points 6 are attached to the roof 1 by bolts or screws or are integrated in the roof 1, fitting to attach the "feet" of the railing 2 to the roof 1 of the nacelle, fixed or detachable. The nacelle has a stronger integral support with more support bars in the area of the heli-hoist platform.

An integrated heli-hoist platform having above construction, is easier to install, less material needed, less parts needed, less weight of the nacelle.

As the upper cover of the nacelle is big enough, only a rail or wall is needed to define the borders of the heli-hoist platform and to avoid that parts slide of the platform or miss the platform while being lowered to the platform. In addition, as the roof 1 of the nacelle is covered with a non-slip surface all over the heli-hoist area, accidents can be prevented.

The invention being thus described, it will be obvious that the same may be varied in many ways. Such variations are not to be regarded as a departure from the spirit and scope of the invention, and all such modifications as would be obvious to those skilled in the art are intended to be included within the scope of the following claims.

## Claims

1. Heli-hoist platform for a nacelle of a wind turbine,
wherein the platform is an integral part of the nacelle, whereby the roof (1) of the nacelle is at the same time the floor of the heli-hoist platform.

2. Heli-hoist platform according to claim 1, wherein the heli-hoist platform comprises railings (2), which are attached to the floor (1) of the heli-hoist platform, whereby a railing (2) is attached to the roof (1) of the nacelle in order to define the borders of the heli-hoist platform and to avoid that parts slide off the heli-hoist platform or miss the heli-hoist platform while being lowered to the heli-hoist platform.

3. Heli-hoist platform according to claim 1, wherein the floor of the heli-hoist platform is covered with a non-slip surface to prevent accidents.

4. Heli-hoist platform according to claim 1, wherein the heli-hoist platform includes an entrance (5) through the floor of the heli-hoist platform to allow the service crew to enter the wind turbine from the heli-hoist platform.

5. Heli-hoist platform according to Claim 1, wherein the floor of the heli-hoist platform is equipped with an additional support (3) inside the nacelle to be capable of bearing more weight.

6. Heli-hoist platform according to Claim 2, wherein the floor (1) of the heli-hoist platform includes several integrated fastening points (6), for attaching the railings (2) to the floor (1) of the heli-hoist platform.

7. Heli-hoist platform according to Claim 6, wherein the several integrated fastening points (6) are attached to the floor (1) of the heli-hoist platform by bolts or screws.

8. Heli-hoist platform according to Claim 6, wherein the several integrated fastening points (6) are integrated in the floor (1) of the heli-hoist platform, fitting to attach the feet of the railings (2) to the floor (1) of the heli-hoist platform.

9. Heli-hoist platform according to Claim 1, wherein the nacelle includes a stronger integral support (3) with more support bars in the area of the heli-hoist platform.
